# EUROPEAN PATENT APPLICATION

(11) **EP 4 730 602 A1**
(43) Date of publication of application: **22.04.2026**
(21) Application number: 25208553.5
(22) Date of filing: 14.10.2025
(51) Int. Cl.: H02J 7/47, H02J 7/60, H02J 7/65, G06F 1/26, G06F 1/28, H02J 7/44

(54) **CABLE FAILURE PROTECTION AND BATTERY KICKSTART IN AN ELECTRONIC DEVICE**

(30) Priority: 17.10.2024 US 202463708444 P; 06.01.2025 US 202563742042 P; 04.09.2025 US 202519318437
(71) Applicant: QORVO US, INC., Greensboro, NC 27409 (US)
(72) Inventor: YANG, Tulong, Texas 75081 (US); DINH, Van Liem, Hai Phong City (VN); PARISI, Carmen, 27409 North Carolina (US)
(74) Representative: D Young & Co LLP

(57) **Abstract**

Cable failure protection and battery kickstart in an electronic device is provided. When the electronic device is attached to an external power supply via a universal serial bus type-C (USB-C) cable, it is important to protect the electronic device from being damaged by a cable failure (e.g., overcurrent, overtemperature, and/or faulty cable). Additionally, when a battery in the electronic device is fully depleted, it is necessary to kickstart recharging of the depleted battery upon attaching to the USB-C cable. Herein, a power management integrated circuit (PMIC) is provided in the electronic device and configured in accordance with the USB-C standard to protect the electronic device from the cable failure and kickstart recharging of the depleted battery. By integrating cable failure protection and battery kickstart functionalities into the PMIC, it is possible to reduce cost and footprint of the PMIC, thus making the PMIC suitable for small formfactor electronic devices.

## Description

### Related Applications

This application claims the benefit of U.S. provisional patent application Ser. No. 63/708,444, filed on Oct. 17, 2024, and U.S. provisional patent application Ser. No. 63/742,042, filed on Jan. 6, 2025, the disclosures of which are hereby incorporated herein by reference in their entireties.

### Field of the Disclosure

The present disclosure is related to universal serial bus type-C (USB-C) cable failure protection and depleted battery kickstart in an electronic device.

### Background

Today's electronic devices (e.g. smartphones and wireless headphones) are typically powered by an embedded battery and/or low dropout (LDO) regulator. Often times, these electronic devices are charged periodically via a universal serial bus type-C (USB-C) cable connecting the electronic devices to an external power supply (e.g., wall charger or portable power bank).

USB-C is an industry-standard connector for transmitting both data and power on a single cable. The USB-C connector was developed by the USB Implementers Forum (USB-IF), a group of companies that has developed, certified, and shepherded the USB standard over the years.

A standard USB-C receptacle and plug include many pins. Among them, a pair of configuration channel (CC) pins (denoted as CC1, CC2), multiple bus voltage (VBUS) pins, and multiple ground (GND) pins are particularly relevant for power charging purposes. The pair of CC pins is used for detecting an attachment of the USB-C cable and an orientation of the USB-C cable once attached. The VBUS pins are used for providing a charging voltage/current from the external power supply to the electronic device once the USB-C cable is properly attached between them.

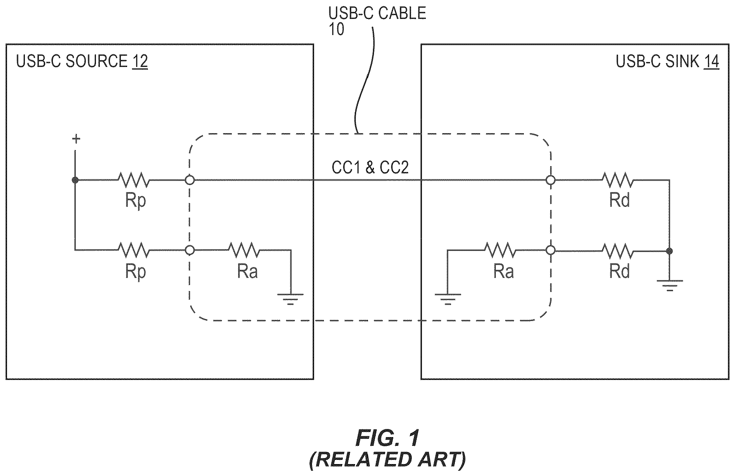

Figure 1 is a schematic diagram providing an example illustration as to how a valid connection of a USB-C cable 10 between a USB-C source 12 (e.g., external power supply) and a USB-C sink 14 (e.g., electronic device) can be detected. According to release 2.0 of the USB-C cable and connector specification, the general concept for setting up a valid connection between the USB-C source 12 and the USB-C sink 14 is based on being able to detect terminations residing in the USB-C sink 14. Initially, the USB-C source 12 exposes independent Rp terminations on the CC1, CC2 pins, whereas the USB-C sink 14 exposes independent Rd terminations on the CC1, CC2 pins. To detect the valid connection between the USB-C source 12 and the USB-C sink 14, the USB-C source 12 monitors the CC1, CC2 pins for a voltage lower than an unterminated voltage, which indicates that the USB-C sink 14 is attached to the USB-C source 12 via the USB-C cable 10. Upon detecting the attachment of the USB-C sink 14, the USB-C source 12 asserts a bus voltage on the VBUS pins (not shown). Accordingly, the USB-C sink 14 can charge the embedded battery and/or LDO regulator based on the bus voltage.

### Summary

Particular aspects are set out in the appended independent claims. Various optional embodiments are set out in the dependent claims. Embodiments of the disclosure relate to cable failure protection and battery kickstart in an electronic device. When the electronic device is attached to an external power supply via a universal serial bus type-C (USB-C) cable, it is important to protect the electronic device from being damaged by a cable failure (e.g., overcurrent, overtemperature, and/or faulty cable). Additionally, when a battery in the electronic device is fully depleted, it is necessary to kickstart recharging of the depleted battery upon attaching to the USB-C cable. In this regard, a power management integrated circuit (PMIC) is provided in the electronic device and configured in accordance with the USB-C standard to protect the electronic device from the cable failure and kickstart recharging of the depleted battery. By integrating cable failure protection and battery kickstart functionalities into the PMIC, as opposed to using discrete solutions, it is possible to reduce cost and footprint of the PMIC, thus making the PMIC suitable for small formfactor electronic devices.

In one aspect, a USB-C charging system is provided. The USB-C charging system includes a USB-C connector. The USB-C connector includes a pair of configuration channel (CC) pins. The pair of CC pins is configured to indicate whether the USB-C connector is attached to an external power supply via a USB-C cable. The USB-C connector also includes a bus voltage (VBUS) pin. The VBUS pin is configured to receive a bus voltage from the external power supply when the pair of CC pins indicate that the USB-C connector is attached to the external power supply. The USB-C charging system also includes a PMIC. The PMIC is coupled to the USB-C connector. The PMIC includes a battery charging circuit. The battery charging circuit is coupled to the VBUS pin. The battery charging circuit is configured to charge an internal always-on voltage regulator based on the bus voltage to provide an always-on voltage (VAO). The PMIC also includes a control circuit. The control circuit is coupled to the pair of CC pins. The control circuit is configured to emulate a detachment condition to the external power supply via the pair of CC pins in response to detecting a failure condition of the USB-C cable to thereby cancel the bus voltage on the VBUS pin. The control circuit is also configured to emulate an attachment condition to the external power supply via the pair of CC pins when the internal always-on voltage regulator is depleted to thereby kickstart the bus voltage on the VBUS pin to charge the internal always-on voltage regulator.

In another aspect, an electronic device is provided. The electronic device includes a USB-C charging system. The USB-C charging system includes a USB-C connector. The USB-C connector includes a pair of CC pins. The pair of CC pins is configured to indicate whether the USB-C connector is attached to an external power supply via a USB-C cable. The USB-C connector also includes a VBUS pin. The VBUS pin is configured to receive a bus voltage from the external power supply when the pair of CC pins indicate that the USB-C connector is attached to the external power supply. The USB-C charging system also includes a PMIC. The PMIC is coupled to the USB-C connector. The PMIC includes a battery charging circuit. The battery charging circuit is coupled to the VBUS pin. The battery charging circuit is configured to charge an internal always-on voltage regulator based on the bus voltage to provide a VAO. The PMIC also includes a control circuit. The control circuit is coupled to the pair of CC pins. The control circuit is configured to emulate a detachment condition to the external power supply via the pair of CC pins in response to detecting a failure condition of the USB-C cable to thereby cancel the bus voltage on the VBUS pin. The control circuit is also configured to emulate an attachment condition to the external power supply via the pair of CC pins when the internal always-on voltage regulator is depleted to thereby kickstart the bus voltage on the VBUS pin to charge the internal always-on voltage regulator.

In another aspect, a method for enabling cable failure protection and battery kickstart in a USB-C charging system is provided. The method includes indicating, via a pair of CC pins in a USB-C connector, whether the USB-C connector is attached to an external power supply via a USB-C cable. The method also includes receiving, via a VBUS pin in the USB-C connector, a bus voltage from the external power supply when the pair of CC pins indicate that the USB-C connector is attached to the external power supply. The method also includes charging an internal always-on voltage regulator based on the bus voltage to provide a VAO. The method also includes emulating a detachment condition to the external power supply via the pair of CC pins in response to detecting a failure condition of the USB-C cable to thereby cancel the bus voltage on the VBUS pin. The method also includes emulating an attachment condition to the external power supply via the pair of CC pins when the internal always-on voltage regulator is depleted to thereby kickstart the bus voltage on the VBUS pin to charge the internal always-on voltage regulator.

Those skilled in the art will appreciate the scope of the present disclosure and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the disclosure and, together with the description, serve to explain the principles of the disclosure.
Figure 1 is a schematic diagram providing an example illustration as to how a valid Universal Serial Bus Type-C (USB-C) cable connection between a USB-C source and a USB-C sink can be detected;
Figure 2 is a schematic diagram of an example USB-C charging system wherein a protection circuit and a control circuit can be integrated into a power management integrated circuit (PMIC) to enable cable failure protection and battery kickstart when the PMIC is attached to an external power supply via a USB-C cable;
Figure 3 is a schematic diagram providing an example detailed illustration of the PMIC in the USB-C charging system of Figure 2 configured according to an embodiment of the present disclosure;
Figure 4 is a graphic diagram providing an example illustration as to how the protection circuit and the control circuit in the PMIC of Figure 3 can enable a battery kickstart in the PMIC;
Figure 5 is a graphic diagram providing an example illustration as to how the protection circuit and the control circuit in the PMIC of Figure 3 can protect the PMIC from a cable failure;
Figure 6 is a schematic diagram of an example communication device wherein the USB-C charging systems of Figures 2 and 3 can be provided; and
Figure 7 is a flowchart of an example process for providing battery kickstart and cable failure protection in the USB-C charging systems of Figures 2 and 3.

### Detailed Description

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

It will be understood that when an element such as a layer, region, or substrate is referred to as being "on" or extending "onto" another element, it can be directly on or extend directly onto the other element or intervening elements may also be present. In contrast, when an element is referred to as being "directly on" or extending "directly onto" another element, there are no intervening elements present. Likewise, it will be understood that when an element such as a layer, region, or substrate is referred to as being "over" or extending "over" another element, it can be directly over or extend directly over the other element or intervening elements may also be present. In contrast, when an element is referred to as being "directly over" or extending "directly over" another element, there are no intervening elements present. It will also be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

Relative terms such as "below" or "above" or "upper" or "lower" or "horizontal" or "vertical" may be used herein to describe a relationship of one element, layer, or region to another element, layer, or region as illustrated in the Figures. It will be understood that these terms and those discussed above are intended to encompass different orientations of the device in addition to the orientation depicted in the Figures.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Embodiments are described herein with reference to cable failure protection and battery kickstart in an electronic device. When the electronic device is attached to an external power supply via a universal serial bus type-C (USB-C) cable, it is important to protect the electronic device from being damaged by a cable failure (e.g., overcurrent, overtemperature, and/or faulty cable). Additionally, when a battery in the electronic device is fully depleted, it is necessary to kickstart recharging of the depleted battery upon attaching to the USB-C cable. In this regard, a power management integrated circuit (PMIC) is provided in the electronic device and configured in accordance with the USB-C standard to protect the electronic device from the cable failure and kickstart recharging of the depleted battery. By integrating cable failure protection and battery kickstart functionalities into the PMIC, as opposed to using discrete solutions, it is possible to reduce cost and footprint of the PMIC, thus making the PMIC suitable for small formfactor electronic devices.

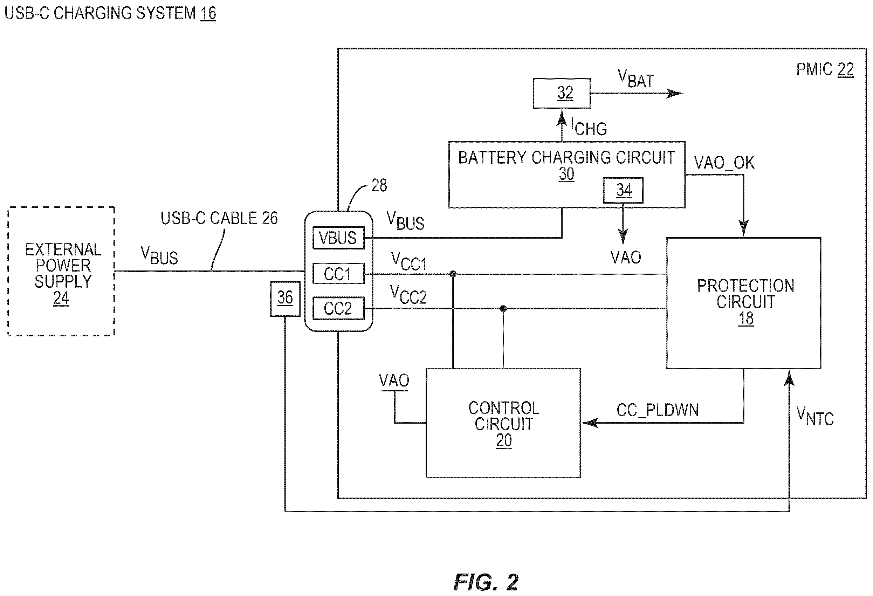

Figure 2 is a schematic diagram of an example USB-C charging system 16 wherein a protection circuit 18 and a control circuit 20 can be integrated into a PMIC 22 to enable cable failure protection and battery kickstart when the PMIC 22 is attached to an external power supply 24 via a USB-C cable 26. The PMIC 22 is attached to the external power supply 24 (e.g., wall charger, portable power bank, etc.) via a USB-C connector 28. The USB-C connector 28 includes all the physical pins as defined in release 2.0 of the USB-C cable and connector specification (hereinafter "USB-C specification"). Among all the physical pins in the USB-C connector 28, only a pair of configuration channel (CC) pins (denoted as CC1, CC2) and a bus voltage pin VBUS are illustrated herein. All other pins in the USB-C connector 28 are omitted for the sake of simplicity.

According to the USB-C specification, the PMIC 22 will maintain unterminated voltages V_{CC1}, V_{CC2} on the pair of CC pins CC1, CC2, respectively, before the USB-C connector 28 is attached to the external power supply 24. When the USB-C connector 28 is attached to the external power supply 24, the PMIC 22 will pull down at least one of the unterminated voltages V_{CC1}, V_{CC2} such that the external power supply 24 can detect the attachment of the PMIC 22 and assert a bus voltage V_{BUS} on the bus voltage pin VBUS. Accordingly, a battery charging circuit 30 can generate a charging current I_{CHG} based on the bus voltage V_{BUS} to thereby charge a battery 32 to a battery voltage V_{BAT}. The PMIC 22 may further include an internal always-on voltage regulator 34, which can be a low dropout (LDO) regulator. The internal always-on voltage regulator 34 can generate an always-on voltage (VAO) based on the bus voltage V_{BUS} to thereby power normal operation of the PMIC 22. When the PMIC 22 is detached from the external power supply 24, the voltages on the pair of CC pins CC1, CC2 will return to the unterminated voltages V_{CC1}, V_{CC2}. Accordingly, the external power supply can detect the detachment of the PMIC 22 and cancel the bus voltage V_{BUS}.

As described in detail below, the PMIC 22 can be configured to emulate the detachment condition by raising the voltages V_{CC1}, V_{CC2} in response to detecting a cable failure condition (e.g., overcurrent, overtemperature, faulty cable, etc.) to thereby cause the external power supply 24 to cancel the bus voltage V_{BUS} without having to physically detach the PMIC 22 from the external power supply 24. In the event that the battery 32 is fully depleted, the PMIC 22 can operate based on respective voltages on the pair of CC pins CC1, CC2 to pull down the voltage V_{CC1}, V_{CC2} to thereby emulate the attachment condition. As a result, the external power supply 24 will assert the bus voltage V_{BUS} on the bus voltage pin VBUS to allow the battery charging circuit 30 to recharge the fully depleted battery 32 to provide the always-on voltage VAO.

In an embodiment, a negative temperature coefficient (NTC) thermistor 36 (e.g., 10 KΩ, 3380K) is provided in proximity to the USB-C connector 28 to thereby generate an NTC voltage V_{NTC}. Herein, the NTC voltage V_{NTC} is inversely related to the temperature of the USB-C connector 28. When the temperature of the USB-C connector 28 increases, the NTC voltage V_{NTC} will decrease. In contrast, when the temperature of the USB-C connector 28 decreases, the NTC voltage V_{NTC} will increase.

The protection circuit 18 can be activated by the battery charging circuit 30 based on an activation signal VAO_OK. Once activated, the protection circuit 18 is configured to determine whether the USB-C connector 28 and/or the USB-C cable 26 is faulty based on the NTC voltage V_{NTC}. Should the protection circuit 18 determine that the USB-C connector 28 and/or the USB-C cable 26 is faulty, the protection circuit 18 will provide a failure correction signal CC_PLDWN to the control circuit 20. Accordingly, the control circuit 20 will emulate the detachment condition by pulling up one or more of the voltages V_{CC1}, V_{CC2} on one or more of the pair of CC pins CC1, CC2. In response, the external power supply 24 will cancel the bus voltage V_{BUS} to thereby protect the PMIC 22.

Notably, the control circuit 20 is also powered by the always-on voltage VAO under normal operating conditions. However, when the battery 32 is fully depleted, the control circuit 20 may no longer be able to operate based on the always-on voltage VAO. In this regard, the control circuit 20 may instead operate based on one or more of the voltages V_{CC1}, V_{CC2} on one or more of the pair of CC pins CC1, CC2. Specifically, the control circuit 20 may pull down one or more of the voltages V_{CC1}, V_{CC2} to thereby emulate the attachment condition. As a result, the external power supply 24 will assert the bus voltage V_{BUS} on the bus voltage pin VBUS to allow the battery charging circuit 30 to recharge the fully depleted battery 32.

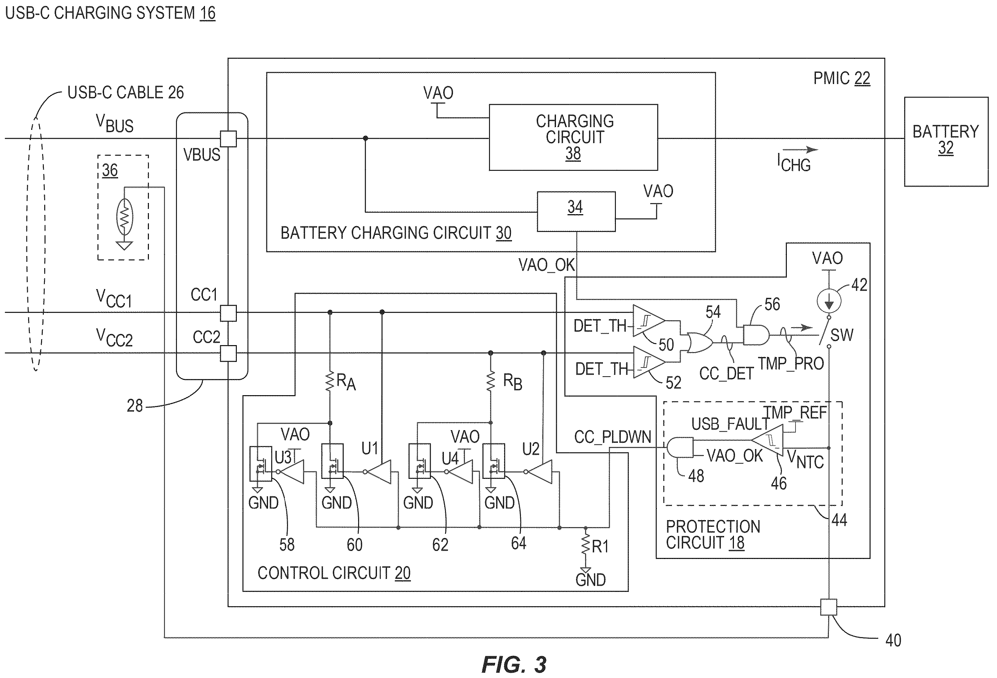

Figure 3 is a schematic diagram providing an example detailed illustration of the PMIC 22 in Figure 2 configured according to an embodiment of the present disclosure. Common elements between Figures 2 and 3 are shown therein with common element numbers and will not be re-described herein.

Herein, the battery charging circuit 30 includes a charging circuit 38 that is coupled to the bus voltage pin VBUS. When the external power supply 24 asserts the bus voltage V_{BUS} on the bus voltage pin VBUS, the charging circuit 38 generates the charging current I_{CHG} based on the bus voltage V_{BUS} to thereby charge the battery 32. The internal always-on voltage regulator 34 is also charged by the bus voltage V_{BUS} to thereby provide the always-on voltage VAO. In this regard, when the bus voltage V_{BUS} is present on the bus voltage pin VBUS, both the battery 32 and the internal always-on voltage regulator 34 will be charged.

The protection circuit 18 is coupled to the NTC thermistor 36 via an NTC pin 40 in the PMIC 22. The protection circuit 18 includes an internal current source 42 that is powered by the internal always-on voltage VAO. The internal current source 42 is coupled to a fault detection circuit 44 via a switch SW. In this regard, the fault detection circuit 44 can be activated in presence of the internal always-on voltage VAO by closing the switch SW or deactivated in absence of the internal always-on voltage VAO by opening the switch SW.

The fault detection circuit 44 includes a fault detection comparator 46. The fault detection comparator 46 is coupled to the NTC pin 40 to receive the NTC voltage V_{NTC} and compare the NTC voltage V_{NTC} against a detection threshold TMP_REF. When the NTC voltage V_{NTC} is below the detection threshold TMP_REF (V_{NTC} < TMP_REF), the fault detection comparator 46 will generate a fault indication USB_FAULT and provide the fault indication USB_FAULT to a fault detection logic AND gate 48. The fault detection logic AND gate 48 will then provide the failure correction signal CC_PLDWN to the control circuit 20. Notably, the fault detection logic AND gate 48 will only generate the failure correction signal CC_PLDWN when the fault detection circuit 44 is activated in the presence of the always-on voltage VAO.

The protection circuit 18 also includes a pair of CC comparators 50, 52, each coupled to a respective one of the pair of CC pins CC1, CC2. Each of the CC comparators 50, 52 compares a respective one of the voltages V_{CC1}, V_{CC2} against a detection threshold DET_TH to determine whether the USB-C connector 28 has been attached to the external power supply 24. A logic OR gate 54 is configured to generate a CC detection indication CC_DET when any of the voltages V_{CC1}, V_{CC2} is above the detection threshold DET_TH.

The protection circuit 18 further includes a protection control comparator 56 that generates a protection enable signal TMP_PRO when the CC detection indication CC_DET and the activation signal VAO_OK, which indicates the presence of the always-on voltage VAO, are both present. The protection enable signal TMP_PRO will close the switch SW to thereby activate the fault detection circuit 44. In an embodiment, the internal always-on voltage regulator 34 will only assert the activation signal VAO_OK when the always-on voltage VAO is above a certain voltage level. As such, the fault detection circuit 44, and therefore the protection circuit 18, will not be enabled when the battery 32 is fully depleted.

The control circuit 20 includes a pair of resistors R_{A}, R_{B} (e.g., 5.1 KΩ) that are coupled to the pair of CC pins CC1, CC2, respectively. The control circuit 20 also includes a first transistor 58, a second transistor 60, a third transistor 62, and a fourth transistor 64. The first transistor 58 and the second transistor 60 are coupled in parallel between the resistor R_{A} and a ground (GND), whereas the third transistor 62 and the fourth transistor 64 are coupled in parallel between the resistor R_{B} and the GND.

The control circuit 20 further includes a first inverter U1, a second inverter U2, a third inverter U3, and a fourth inverter U4. The first inverter U1 is coupled between the second transistor 60 and a resistor R1, the second inverter U2 is coupled between the fourth transistor 64 and the resistor R1, the third inverter U3 is coupled between the first transistor 58 and the resistor R1, and the fourth inverter U4 is coupled between the third transistor 62 and the resistor R1.

In an embodiment, the resistor R1 is coupled to the GND to ensure that a default state of the failure correction signal CC_PLDWN is kept low such that the first inverter U1 and the second inverter U2 can turn on the second transistor 60 and the fourth transistor 64, respectively, when the battery 32 is fully depleted and the rest of the PMIC 22 is powered off. Specifically, when the second transistor 60 is turned on by the first inverter U1, the resistor R_{A} will be coupled to the GND to thereby reduce the voltage V_{CC1}. Likewise, when the fourth transistor 64 is turned on by the second inverter U2, the resistor R_{B} will be coupled to the GND to thereby reduce the voltage V_{CC2}. As described earlier, by pulling down the voltages V_{CC1}, V_{CC2} on the pair of CC pins CC1, CC2, it is possible to emulate the attachment condition to thereby cause the external power supply 24 to assert the bus voltage V_{BUS} to recharge the battery 32.

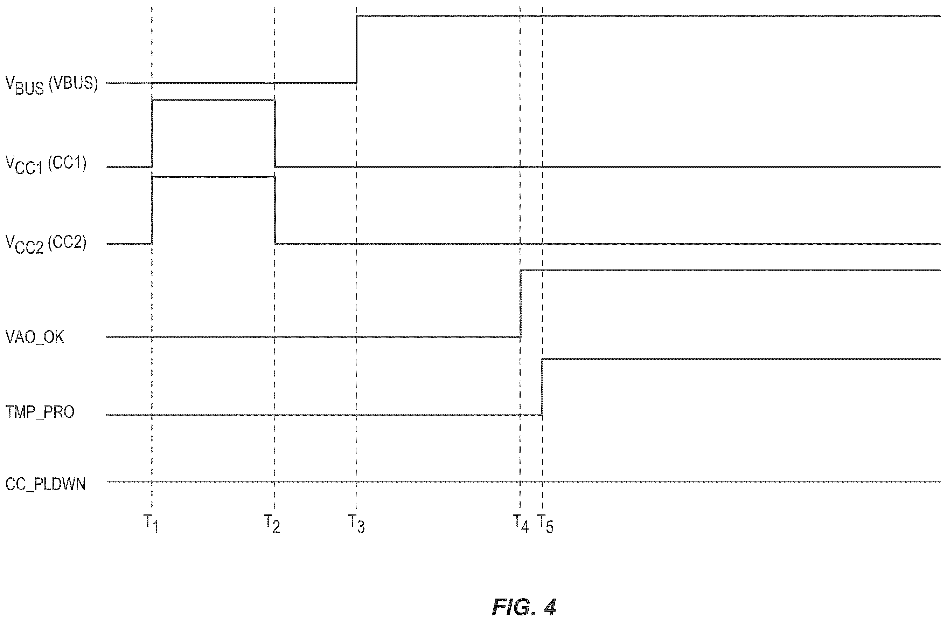

Figure 4 is a graphic diagram providing an example illustration as to how the protection circuit 18 and the control circuit 20 in the PMIC 22 of Figure 3 can enable the battery kickstart operation. Common elements between Figures 3 and 4 are shown therein with common element numbers and will not be re-described herein.

Prior to time T₁, the PMIC 22 is not yet attached to the external power supply 24 but the battery 32 is fully depleted. At time T₁, the PMIC 22 is attached to the external power supply 24 via the USB-C cable 26 and the USB-C connector 28. As such, the voltages V_{CC1}, V_{CC2} on the pair of CC pins CC1, CC2 are both held high at the unterminated level. At time T₂ (T₂ > T₁), the control circuit 20 pulls down the voltages V_{CC1}, V_{CC2} to emulate the attachment condition. Accordingly, at time T₃ (T₃ ≥ T₂), the external power supply 24 asserts the bus voltage V_{BUS} on the voltage supply pin VBUS. Subsequently, at time T₄ (T₄ > T₃), the internal always-on voltage regulator 34 is sufficiently charged to the always-on voltage VAO and generates the activation signal VAO_OK. The protection control comparator 56 then generates the protection enable signal TMP_PRO at time T₅ (T₅ > T₄) to activate the protection circuit 18. The failure correction signal CC_PLDWN is kept low until the protection circuit 18 detects the cable failure.

With reference back to Figure 3, the third inverter U3 and the fourth inverter U4 are each powered by the always-on voltage VAO. In this regard, the third inverter U3 and the fourth inverter U4 will not be operational when the battery 32 is fully depleted. When the internal always-on voltage regulator 34 is sufficiently charged to provide the always-on voltage VAO, the third inverter U3 and the fourth inverter U4 will be operational along with the protection circuit 18. As such, when the fault detection circuit 44 asserts the failure correction signal CC_PLDWN, the third inverter U3 and the fourth inverter U4 will open the first transistor 58 and the third transistor 62. Accordingly, the resistors R_{A}, R_{B} will become floating to thereby pull up the voltages V_{CC1}, V_{CC2} to thereby emulate the detachment condition.

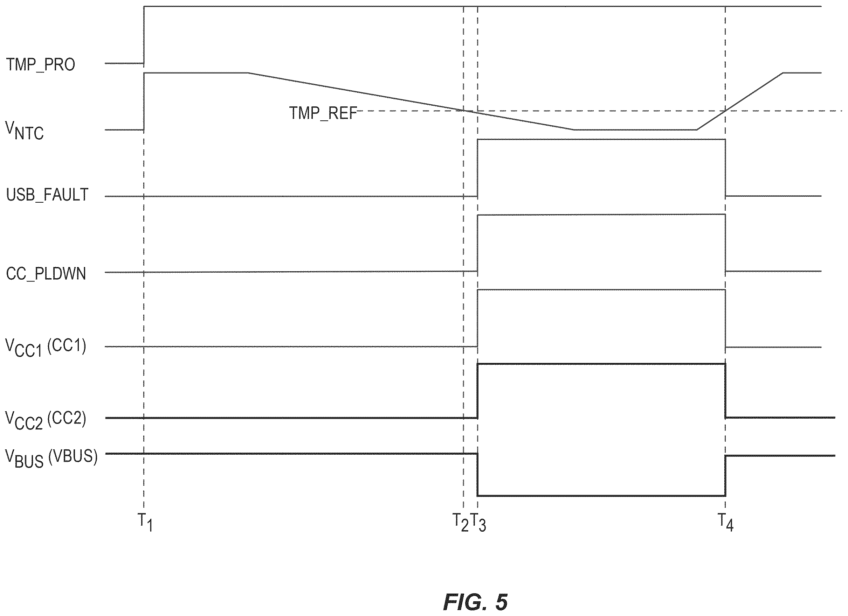

Figure 5 is a graphic diagram providing an example illustration as to how the protection circuit 18 and the control circuit 20 in the PMIC 22 of Figure 3 can protect the PMIC from the cable failure. Common elements between Figures 3 and 5 are shown therein with common element numbers and will not be re-described herein.

At time T₁, the protection circuit 18 is activated to monitor the NTC voltage V_{NTC}. At time T₂ (T₂ ≥ T₁), the NTC voltage V_{NTC} falls below the detection threshold TMP_REF. Accordingly, at time T₃ (T₃ ≥ T₂), the fault detection comparator 46 will generate the fault indication USB_FAULT to thereby cause the fault detection logic AND gate 48 to assert the failure correction signal CC_PLDWN. Accordingly, the third inverter U3 and the fourth inverter U4 will open the first transistor 58 and the third transistor 62, respectively, to raise the voltages V_{CC1}, V_{CC2} on the pair of CC pins CC1, CC2 to thereby cause the external power supply 24 to cancel the bus voltage V_{BUS} on the bus voltage pin VBUS. At time T₄ (T₄ > T₃), the NTC voltage V_{NTC} rises above the detection threshold TMP_REF. Accordingly, the fault indication USB_FAULT becomes low causing the failure correction signal CC_PLDWN to be de-asserted. The third inverter U3 and the fourth inverter U4, in turn, will close the first transistor 58 and the third transistor 62, respectively, to pull down the voltages V_{CC1}, V_{CC2} on the pair of CC pins CC1, CC2 to thereby cause the external power supply 24 to re-assert the bus voltage V_{BUS} on the bus voltage pin VBUS.

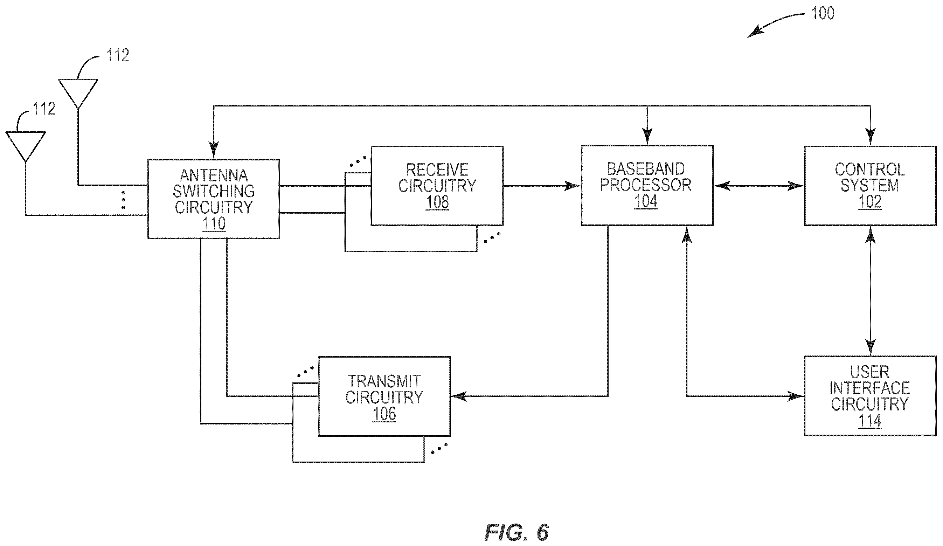

The USB-C charging system 16 of Figures 2 and 3 can be provided in a communication device to support the embodiments described above. In this regard, Figure 6 is a schematic diagram of an example communication device 100 wherein the USB-C charging system 16 of Figures 2 and 3 can be provided.

Herein, the communication device 100 can be any type of communication devices, such as mobile terminals, smart watches, tablets, computers, navigation devices, access points, base stations (e.g., eNB, gNB, etc.), and like wireless communication devices that support wireless communications, such as cellular, wireless local area network (WLAN), Ultra-wideband (UWB), Bluetooth, and near-field communications. The communication device 100 will generally include a control system 102, a baseband processor 104, transmit circuitry 106, receive circuitry 108, antenna switching circuitry 110, multiple antennas 112, and user interface circuitry 114. In a non-limiting example, the control system 102 can be a field-programmable gate array (FPGA), as an example. In this regard, the control system 102 can include at least a microprocessor, an embedded memory circuit, and a communication bus interface. The receive circuitry 108 receives radio frequency signals via the antennas 112 and through the antenna switching circuitry 110 from one or more base stations. A low-noise amplifier and a filter cooperate to amplify and remove broadband interference from the received signal for processing. Downconversion and digitization circuitry (not shown) will then downconvert the filtered, received signal to an intermediate or baseband frequency signal, which is then digitized into one or more digital streams using analog-to-digital converters (ADCs).

The baseband processor 104 processes the digitized received signal to extract the information or data bits conveyed in the received signal. This processing typically comprises demodulation, decoding, and error correction operations, as will be discussed in greater detail below. The baseband processor 104 is generally implemented in one or more digital signal processors (DSPs) and application-specific integrated circuits (ASICs).

For transmission, the baseband processor 104 receives digitized data, which may represent voice, data, or control information, from the control system 102, which it encodes for transmission. The encoded data is output to the transmit circuitry 106, where a digital-to-analog converter (DAC) converts the digitally encoded data into an analog signal and a modulator modulates the analog signal onto a carrier signal that is at a desired transmit frequency or frequencies. A power amplifier will amplify the modulated carrier signal to a level appropriate for transmission and deliver the modulated carrier signal to the antennas 112 through the antenna switching circuitry 110. The multiple antennas 112 and the replicated transmit 106 and receive circuitry 108 may provide spatial diversity. Modulation and processing details will be understood by those skilled in the art.

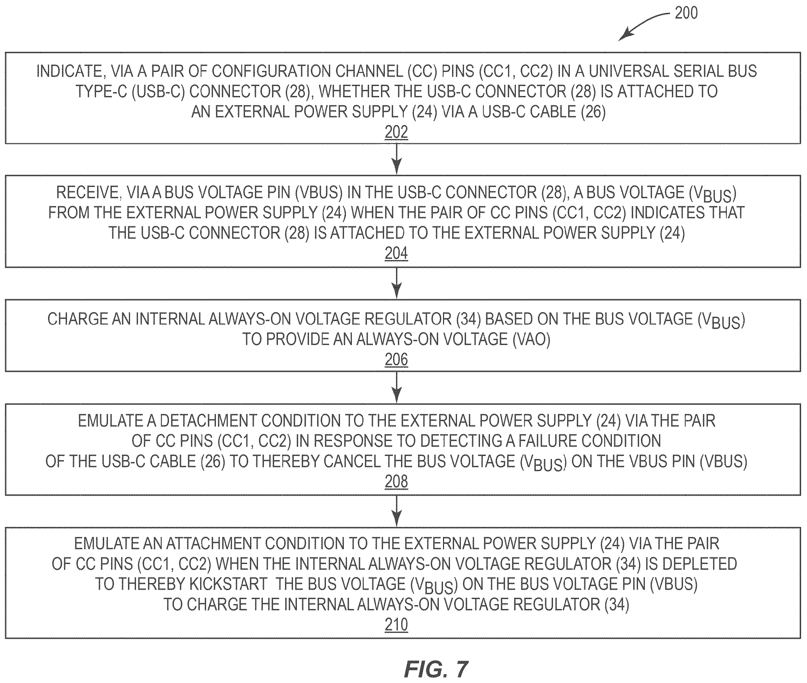

In an embodiment, the USB-C charging system 16 of Figures 2 and 3 can be operated in accordance with a process. In this regard, Figure 7 is a flowchart of an example process 200 for enabling cable failure protection and battery kickstart in the USB-C charging system 16 of Figures 2 and 3.

Herein, the process 200 includes indicating, via the pair of CC pins CC1, CC2 in the USB-C connector 28, whether the USB-C connector 28 is attached to the external power supply 24 via the USB-C cable 26 (step 202). The process 200 also includes receiving, via the VBUS pin in the USB-C connector 28, the bus voltage V_{BUS} from the external power supply 24 when the pair of CC pins CC1, CC2 indicate that the USB-C connector 28 is attached to the external power supply 24 (step 204). The process 200 also includes charging the internal always-on voltage regulator 34 based on the bus voltage V_{BUS} to provide the always-on voltage VAO (step 206). The process 200 also includes emulating the detachment condition to the external power supply 24 via the pair of CC pins CC1, CC2 in response to detecting the failure condition of the USB-C cable 26 to thereby cancel the bus voltage V_{BUS} on the VBUS pin (step 208). The process 200 also includes emulating the attachment condition to the external power supply 24 via the pair of CC pins CC1, CC2 when the internal always-on voltage regulator 34 is depleted to thereby kickstart the bus voltage V_{BUS} on the VBUS pin to charge the internal always-on voltage regulator 34 (step 210).

Thus, from one perspective, there has now been described cable failure protection and battery kickstart in an electronic device. When the electronic device is attached to an external power supply via a universal serial bus type-C (USB-C) cable, it is important to protect the electronic device from being damaged by a cable failure (e.g., overcurrent, overtemperature, and/or faulty cable). Additionally, when a battery in the electronic device is fully depleted, it is necessary to kickstart recharging of the depleted battery upon attaching to the USB-C cable. Herein, a power management integrated circuit (PMIC) is provided in the electronic device and configured in accordance with the USB-C standard to protect the electronic device from the cable failure and kickstart recharging of the depleted battery. By integrating cable failure protection and battery kickstart functionalities into the PMIC, it is possible to reduce cost and footprint of the PMIC, thus making the PMIC suitable for small formfactor electronic devices.

Those skilled in the art will recognize improvements and modifications to the preferred embodiments of the present disclosure. All such improvements and modifications are considered within the scope of the concepts disclosed herein and the claims that follow.

Further examples of feature combinations taught by the present disclosure are set out in the following numbered clauses:
1. A universal serial bus type-C (USB-C) charging system comprising:
   a USB-C connector comprising:
      a pair of configuration channel (CC) pins configured to indicate whether the USB-C connector is attached to an external power supply via a USB-C cable; and
      a bus voltage (VBUS) pin configured to receive a bus voltage from the external power supply when the pair of CC pins indicate that the USB-C connector is attached to the external power supply; and
   a power management integrated circuit (PMIC) coupled to the USB-C connector and comprising:
      a battery charging circuit coupled to the VBUS pin and configured to charge an internal always-on voltage regulator based on the bus voltage to provide an always-on voltage (VAO); and
      a control circuit coupled to the pair of CC pins and configured to:
         emulate a detachment condition to the external power supply via the pair of CC pins in response to detecting a failure condition of the USB-C cable to thereby cancel the bus voltage on the VBUS pin; and
         emulate an attachment condition to the external power supply via the pair of CC pins when the internal always-on voltage regulator is depleted to thereby kickstart the bus voltage on the VBUS pin to charge the internal always-on voltage regulator.
2. The USB-C charging system of clause 1, wherein the control circuit is further configured to emulate the detachment condition under the failure condition without requiring the USB-C connector to be physically detached from the external power supply.
3. The USB-C charging system of clause 1 or clause 2, wherein the control circuit is further configured to pull up a respective voltage on each of the pair of CC pins in the failure condition to thereby emulate the detachment condition to the external power supply.
4. The USB-C charging system of any preceding clause, wherein the control circuit is further configured to pull down a respective voltage on each of the pair of CC pins when the internal always-on voltage regulator is depleted to thereby emulate the attachment condition to the external power supply.
5. The USB-C charging system of clause 4, wherein the control circuit is further configured to operate based on the respective voltage on each of the pair of CC pins when the internal always-on voltage regulator is depleted.
6. The USB-C charging system of any preceding clause, wherein the PMIC further comprises a protection circuit coupled to the battery charging circuit and the control circuit, the protection circuit is configured to detect the failure condition of the USB-C cable and provide a failure correction signal to the control circuit in response to detecting the failure condition.
7. The USB-C charging system of clause 6, wherein the protection circuit is activated when the USB-C connector is attached to the external power supply and the always-on voltage (VAO) is above a reference threshold.
8. The USB-C charging system of clause 6 or clause 7, wherein the protection circuit is further configured to:
   receive a negative temperature coefficient (NTC) voltage from an NTC thermistor placed in proximity to the USB-C connector; and
   provide the failure correction signal to the control circuit when the NTC voltage is below a detection threshold.
9. An electronic device comprising a universal serial bus type-C (USB-C) charging system, the USB-C charging system comprises:
   a USB-C connector comprising:
      a pair of configuration channel (CC) pins configured to indicate whether the USB-C connector is attached to an external power supply via a USB-C cable; and
      a bus voltage (VBUS) pin configured to receive a bus voltage from the external power supply when the pair of CC pins indicate that the USB-C connector is attached to the external power supply; and
   a power management integrated circuit (PMIC) coupled to the USB-C connector and comprising:
      a battery charging circuit coupled to the VBUS pin and configured to charge an internal always-on voltage regulator based on the bus voltage to provide an always-on voltage (VAO); and
      a control circuit coupled to the pair of CC pins and configured to:
         emulate a detachment condition to the external power supply via the pair of CC pins in response to detecting a failure condition of the USB-C cable to thereby cancel the bus voltage on the VBUS pin; and
         emulate an attachment condition to the external power supply via the pair of CC pins when the internal always-on voltage regulator is depleted to thereby kickstart the bus voltage on the VBUS pin to charge the internal always-on voltage regulator.
10. The electronic device of clause 9, wherein the control circuit is further configured to emulate the detachment condition under the failure condition without requiring the USB-C connector to be physically detached from the external power supply.
11. The electronic device of clause 9 or clause 10, wherein the control circuit is further configured to pull up a respective voltage on each of the pair of CC pins in the failure condition to thereby emulate the detachment condition to the external power supply.
12. The electronic device of any of clauses 9 to 11, wherein the control circuit is further configured to pull down a respective voltage on each of the pair of CC pins when the internal always-on voltage regulator is depleted to thereby emulate the attachment condition to the external power supply.
13. The electronic device of clause 12, wherein the control circuit is further configured to operate based on the respective voltage on each of the pair of CC pins when the internal always-on voltage regulator is depleted.
14. The electronic device of any of clauses 9 to 13, wherein the PMIC further comprises a protection circuit coupled to the battery charging circuit and the control circuit, the protection circuit is configured to detect the failure condition of the USB-C cable and provide a failure correction signal to the control circuit in response to detecting the failure condition.
15. The electronic device of clause 14, wherein the protection circuit is activated when the USB-C connector is attached to the external power supply and the always-on voltage (VAO) is above a reference threshold.
16. The electronic device of clause 14 or clause 15, wherein the protection circuit is further configured to:
   receive a negative temperature coefficient (NTC) voltage from an NTC thermistor placed in proximity to the USB-C connector; and
   provide the failure correction signal to the control circuit when the NTC voltage is below a detection threshold.
17. A method for enabling cable failure protection and battery kickstart in a universal serial bus type-C (USB-C) charging system comprising:
   indicating, via a pair of configuration channel (CC) pins in a USB-C connector, whether the USB-C connector is attached to an external power supply via a USB-C cable;
   receiving, via a bus voltage (VBUS) pin in the USB-C connector, a bus voltage from the external power supply when the pair of CC pins indicate that the USB-C connector is attached to the external power supply;
   charging an internal always-on voltage regulator based on the bus voltage to provide an always-on voltage (VAO);
   emulating a detachment condition to the external power supply via the pair of CC pins in response to detecting a failure condition of the USB-C cable to thereby cancel the bus voltage on the VBUS pin; and
   emulating an attachment condition to the external power supply via the pair of CC pins when the internal always-on voltage regulator is depleted to thereby kickstart the bus voltage on the VBUS pin to charge the internal always-on voltage regulator.
18. The method of clause 17, further comprising pulling up a respective voltage on each of the pair of CC pins in the failure condition to thereby emulate the detachment condition to the external power supply.
19. The method of clause 17 or clause 18, further comprising pulling down a respective voltage on each of the pair of CC pins when the internal always-on voltage regulator is depleted to thereby emulate the attachment condition to the external power supply.
20. The method of any of clauses 17 to 19, further comprising:
   receiving a negative temperature coefficient (NTC) voltage from an NTC thermistor placed in proximity to the USB-C connector; and
   indicating the failure condition when the NTC voltage is below a detection threshold.

## Claims

1. A universal serial bus type-C (USB-C) charging system comprising:
a USB-C connector comprising:
a pair of configuration channel (CC) pins configured to indicate whether the USB-C connector is attached to an external power supply via a USB-C cable; and
a bus voltage (VBUS) pin configured to receive a bus voltage from the external power supply when the pair of CC pins indicate that the USB-C connector is attached to the external power supply; and
a power management integrated circuit (PMIC) coupled to the USB-C connector and comprising:
a battery charging circuit coupled to the VBUS pin and configured to charge an internal always-on voltage regulator based on the bus voltage to provide an always-on voltage (VAO); and
a control circuit coupled to the pair of CC pins and configured to:
emulate a detachment condition to the external power supply via the pair of CC pins in response to detecting a failure condition of the USB-C cable to thereby cancel the bus voltage on the VBUS pin; and
emulate an attachment condition to the external power supply via the pair of CC pins when the internal always-on voltage regulator is depleted to thereby kickstart the bus voltage on the VBUS pin to charge the internal always-on voltage regulator.

2. The USB-C charging system of claim 1, wherein the control circuit is further configured to emulate the detachment condition under the failure condition without requiring the USB-C connector to be physically detached from the external power supply.

3. The USB-C charging system of claim 1 or claim 2, wherein the control circuit is further configured to pull up a respective voltage on each of the pair of CC pins in the failure condition to thereby emulate the detachment condition to the external power supply.

4. The USB-C charging system of any preceding claim, wherein the control circuit is further configured to pull down a respective voltage on each of the pair of CC pins when the internal always-on voltage regulator is depleted to thereby emulate the attachment condition to the external power supply.

5. The USB-C charging system of claim 4, wherein the control circuit is further configured to operate based on the respective voltage on each of the pair of CC pins when the internal always-on voltage regulator is depleted.

6. The USB-C charging system of any preceding claim, wherein the PMIC further comprises a protection circuit coupled to the battery charging circuit and the control circuit, the protection circuit is configured to detect the failure condition of the USB-C cable and provide a failure correction signal to the control circuit in response to detecting the failure condition.

7. The USB-C charging system of claim 6, wherein the protection circuit is activated when the USB-C connector is attached to the external power supply and the always-on voltage (VAO) is above a reference threshold.

8. The USB-C charging system of claim 6 or claim 7, wherein the protection circuit is further configured to:
receive a negative temperature coefficient (NTC) voltage from an NTC thermistor placed in proximity to the USB-C connector; and
provide the failure correction signal to the control circuit when the NTC voltage is below a detection threshold.

9. An electronic device comprising the USB-C charging system according to any of claims 1 to 8.

10. A method for enabling cable failure protection and battery kickstart in a universal serial bus type-C (USB-C) charging system comprising:
indicating, via a pair of configuration channel (CC) pins in a USB-C connector, whether the USB-C connector is attached to an external power supply via a USB-C cable;
receiving, via a bus voltage (VBUS) pin in the USB-C connector, a bus voltage from the external power supply when the pair of CC pins indicate that the USB-C connector is attached to the external power supply;
charging an internal always-on voltage regulator based on the bus voltage to provide an always-on voltage (VAO);
emulating a detachment condition to the external power supply via the pair of CC pins in response to detecting a failure condition of the USB-C cable to thereby cancel the bus voltage on the VBUS pin; and
emulating an attachment condition to the external power supply via the pair of CC pins when the internal always-on voltage regulator is depleted to thereby kickstart the bus voltage on the VBUS pin to charge the internal always-on voltage regulator.

11. The method of claim 10, further comprising pulling up a respective voltage on each of the pair of CC pins in the failure condition to thereby emulate the detachment condition to the external power supply.

12. The method of claim 10 or claim 11, further comprising pulling down a respective voltage on each of the pair of CC pins when the internal always-on voltage regulator is depleted to thereby emulate the attachment condition to the external power supply.

13. The method of any of claims 10 to 12, further comprising:
receiving a negative temperature coefficient (NTC) voltage from an NTC thermistor placed in proximity to the USB-C connector; and
indicating the failure condition when the NTC voltage is below a detection threshold.
